# DEMANDE DE BREVET EUROPEEN

(11) **EP 1 039 783 A1**
(43) Date de publication de la demande: **27.09.2000**
(21) Numéro de dépôt: 00400809.0
(22) Date de dépôt: 23.03.2000
(51) Int. Cl.: H05B 6/80

(54) **Agencement de chauffage d'un produit diélectrique par micro-ondes**

(30) Priorité: 25.03.1999 FR 9903749
(71) Demandeur: ANJOU RECHERCHE (GROUPEMENT D'INTERET ECONOMIQUE DIT:), 75008 Paris (FR); CONSTRUCTIONS INDUSTRIELLES DE LA MEDITERRANEE- CNIM, F-75008 Paris (FR)
(72) Inventeur: Delmotte, Michel Noel Louis, 92340 Bourg-la-Reine (FR); Trabelsi, Yassine, 92160 Antony (FR); Petitet, Jean-Pierre, 93220 Gagny (FR); Michel, Jean-Pierre Roger François, 95150 Taverny (FR)
(74) Mandataire: Thinat, Michel

(57) **Abrégé**

L'invention concerne un agencement de chauffage d'un produit diélectrique par micro-ondes.

Cet agencement est du type comprenant un réacteur (1) à paroi latérale métallique de traitement dudit produit diélectrique, alimenté par au moins une de ses extrémités en micro-ondes par l'intermédiaire d'un guide d'ondes (6, 7) relié à un générateur micro-ondes, en vue de l'obtention d'une transformation physico-chimique, tel que le traitement hydrothermique de déchets. L'agencement est caractérisé en ce que le réacteur est formé par un cylindre (1) dont l'espace interne (2) délimité par la paroi métallique est rempli du produit à traiter et en ce qu'il comporte des moyens de réduction de la température de la paroi par rapport à la température dans la zone axiale du réacteur, ces moyens étant formés par une configuration monomodale du réacteur, selon laquelle l'intensité du champ électrique est réduite à la périphérie par rapport à la partie axiale de l'espace interne.

L'invention est utilisable pour le traitement hydrothermique des déchets.

## Description

L'invention concerne un agencement de chauffage d'un produit diélectrique par micro-ondes, du type comprenant un réacteur à paroi latérale métallique de traitement dudit produit diélectrique fermé à au moins une de ses extrémités par une fenêtre en un matériau diélectrique transparent aux micro-ondes, pour application au réacteur de micro-ondes par l'intermédiaire d'un guide d'ondes relié à un générateur micro-ondes.

Des agencements d'échauffement par micro-ondes sont déjà connus et sont adaptés pour fonctionner en un mode de propagation assurant une répartition uniforme de l'énergie électromagnétique dans la section transversale du réacteur dans le but d'obtenir un échauffement uniforme dans le produit à traiter.

Il s'est avéré que les réacteurs microondes constituent une technologie prometteuse pour certaines transformations physicohimiques et notamment le traitement de déchets en milieu aqueux à température et pression élevées, appelé oxydation hydrothermique. Par exemple, l'oxydation en milieu aqueux supercritique est utilisée pour traiter les effluents liquides chargés en composés organiques et pour lesquels les procédés de traitement conventionnels sont inefficaces, soit parce qu'ils sont trop dilués pour être incinérés soit parce qu'ils sont trop toxiques pour subir un traitement biologique. D'autres exemples peuvent être cités, notamment ceux de la pyrolyse, de la thermolyse et de l'hydrolyse de composés organiques en absence d'oxygène qui vont conduire à des produits de faible masse moléculaire solubles ou non dans la phase aqueuse.

Le développement de ces procédés, qui impliquent l'échauffement des produits à traiter, à des températures généralement comprises entre 150 et 600°C et à des pressions comprises entre 2 et 40 MPa, se heurte à des problèmes intimement liés et occasionnés par l'échauffement excessif correspondant des parois du réacteur, à savoir la redéposition des sels minéraux, la formation de dépôts carbonés, la corrosion des matériaux. Pour résoudre ces problèmes, il a été proposé de refroidir ou de protéger les parois par différents moyens, tels que des films d'eau froide, des tubes à parois perforées ou poreuses. Les efforts entrepris dans ce sens ont abouti à des agencements encombrants ou peu efficaces.

La présente invention a pour but de proposer un agencement d'échauffement de produits diélectriques par micro-ondes, qui apporte une solution satisfaisante aux problèmes qui viennent d'être énoncés.

Pour atteindre ce but, l'agencement selon l'invention est caractérisé en ce que le réacteur est formé par un cylindre dont l'espace interne délimité par la paroi métallique est rempli du produit à traiter et en ce qu'il comporte des moyens de réduction de la température de la paroi par rapport à la température dans la zone axiale du réacteur, ces moyens étant formés par une configuration monomodale du réacteur, selon laquelle l'intensité du champ électrique est réduite à la périphérie par rapport à la partie axiale de l'espace interne.

Selon une autre caractéristique de l'invention, le guide d'ondes d'adaptation des sections transversales de la sortie du générateur micro-ondes et du réacteur est configuré pour assurer des variations continues des surfaces métalliques conductrices.

Selon une autre caractéristique de l'invention, pour un agencement dans lequel le réacteur est fermé à au moins une de ses extrémités par un corps en un matériau diélectrique formant fenêtre permettant la pénétration des micro-ondes au sein du réacteur, le corps a une forme assurant une adaptation électromagnétique des deux interfaces au niveau du corps, respectivement à l'extérieur et à l'intérieur du réacteur.

Selon une autre caractéristique de l'invention, le corps en matériau diélectrique a la forme d'un rhomboèdre constitué de deux cônes ou de plusieurs troncs de cônes identiques ou différents associés, le cas échéant, par leurs bases à l'aide d'une partie cylindrique.

Selon une autre caractéristique de l'invention, l'épaisseur des parois métalliques du réacteur est choisie en fonction de la pression régnant dans l'espace interne du réacteur.

Selon encore une autre caractéristique de l'invention, le mode de propagation monomodal de guide d'ondes dans le réacteur constitue un moyen de réduction de l'inertie thermique du réacteur.

Selon encore une autre caractéristique de l'invention, le réacteur est pourvu de sondes de mesure de la température à l'intérieur du réacteur qui constituent des moyens de contrôle et de maîtrise des conditions de température du réacteur, notamment par rétroaction sur le choix de la puissance électromagnétique mise en oeuvre.

L'invention sera mieux comprise et d'autres buts, caractéristiques, détails et avantages de celle-ci apparaîtront plus clairement dans la description explicative qui va suivre faite en référence aux figures annexées données uniquement à titre d'exemple illustrant schématiquement un agencement de chauffage par micro-ondes d'un produit diélectrique, selon la présente invention.

La figure 1 est une vue en coupe axiale d'un agencement selon l'invention.

La figure 2 est une vue en coupe axiale, avec arrachement, d'une autre version de l'agencement selon l'invention.

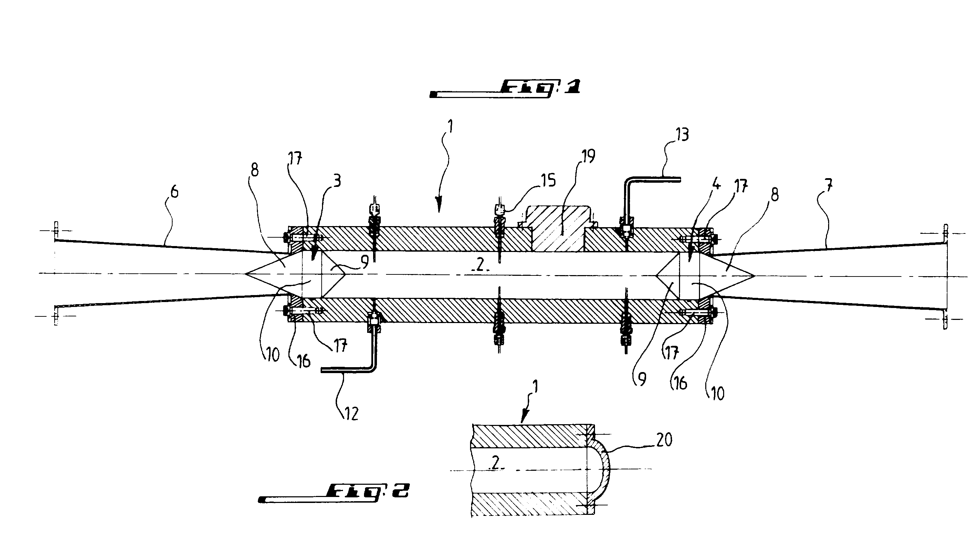

La figure 1 montre en 1 le réacteur réalisé sous forme d'un cylindre à paroi latérale métallique circulaire dont l'espace interne 2 est fermé à ses deux extrémités par des corps 3, 4 en un matériau diélectrique formant fenêtres pour permettre le passage des ondes électromagnétiques du domaine des micro-ondes. A chaque extrémité du réacteur est raccordé un guide d'ondes 6, 7 destiné à transmettre les micro-ondes produites par un générateur micro-ondes au réacteur.

Chaque guide d'ondes 6 ou 7 est configuré de façon à assurer une adaptation de la section du guide d'ondes côté générateur, de forme normalement rectangulaire, à la section circulaire du réacteur 1. Le guide d'ondes assure une variation continue des surfaces métalliques conductrices.

Chaque corps 3 ou 4 en un matériau diélectrique est configuré de manière à réaliser une adaptation électromagnétique de ses deux interfaces. Comme le montre la figure, chaque corps présente la forme d'un rhomboèdre constitué de deux cônes 8, 9 entre lesquels est disposé une partie cylindrique 10. Les cônes peuvent être de forme différentes comme sur la figure, ou de formes identiques. La partie cylindrique pourrait être supprimée, le cas échéant. Grâce à cette forme particulière des fenêtres, on obtient une réduction des réflexions des micro-ondes aux deux interfaces à l'extrémité du réacteur.

Le produit à traiter dans le réacteur 1 remplit l'espace interne 2 de ce dernier et est donc en contact direct avec la face interne de la paroi de réacteur. L'amenée et l'évacuation du produit sous pression sont assurées par des tubulures désignées par les références 12 et 13. On constate encore que le réacteur est pourvu de sondes de mesure de température 15 placées dans l'espace 2. Ces sondes sont réparties sur la longueur du réacteur de façon à pouvoir contrôler la répartition de la température à l'intérieur du produit à traiter qui remplit l'espace interne 2.

Le réacteur 1 est configuré sous forme d'un dispositif monomodal, fonctionnant en mode de propagation TE11 pour lequel la distribution spatiale du champ électrique est plus faible au niveau des parois du réacteur que dans la partie axiale. Grâce à ce mode de propagation, la température aussi est plus faible au niveau des parois que dans la zone axiale.

L'épaisseur des parois métalliques du réacteur est choisie de façon à pouvoir résister même à des pressions élevées dans l'espace interne 2. Les corps diélectriques 3, 4 sont également conçus pour pouvoir résister mécaniquement à la contrainte de telles pressions. Le matériau constitutif de ces corps peut être notamment une céramique, de l'alumine, de la silice.

Grâce à sa structure qui vient d'être décrite, l'agencement selon l'invention peut être utilisé pour la réalisation de tout type de transformation chimique ou physico-chimique devant être mené sous conditions de température et de pression élevées, tout en étant parfaitement contrôlé et maîtrisé. Ces transformations peuvent être menées en mode discontinu ou continu selon que les produits à traiter le nécessitent ou le permettent.

Pour le traitement de produits solides, leur introduction dans le réacteur nécessite de prévoir une ouverture d'accès à l'espace interne 2. Une possibilité d'accéder à l'espace interne du réacteur consiste à enlever un corps diélectrique par démontage de la plaque de support frontale 16 qui est vissée en 17 sur la face frontale du cylindre. Une autre possibilité est de prévoir dans la paroi latérale du réacteur une ouverture obturable par un insert d'obturation tel que montré schématiquement en 19 et fixé amovible sur la paroi du réacteur de façon connue en soi.

Ainsi, l'agencement selon l'invention est notamment approprié pour permettre le traitement hydrothermique des déchets. L'invention permet ainsi de traiter les effluents liquides chargés en composés organiques.

L'agencement selon l'invention permet de surmonter les problèmes majeurs, à savoir la redéposition des sels minéraux, les dépôts carbonés et la corrosion des matériaux occasionnés par de tels traitements. En effet, l'échauffement excessif de la paroi du réacteur, la cause de ces problèmes, est évitée, conformément à l'invention, grâce au fait que le réacteur fonctionne en mode de propagation TE11 procurant une température plus faible au niveau des parois, due à la répartition non uniforme du champ électrique.

Cette répartition du champ entraînant la réduction de la température au niveau des parois résoud aussi le problème fonctionnel qu'occasionne normalement l'inertie thermique importante de la paroi épaisse du réacteur en ralentissant la montée de la température incompatible avec un bon déroulement d'un traitement hydrothermique. Dans le cas de l'invention, du fait que la température au niveau des parois est relativement faible par rapport à la zone axiale du réacteur, l'impact de l'épaisseur de la paroi du réacteur est considérablement réduite et la température à l'intérieur du réacteur est augmentée rapidement en étant surveillée par les sondes thermiques 15.

A titre d'exemple, pour un réacteur qui aurait un diamètre interne de 60 mm et une épaisseur de paroi de 30 mm, ou un réacteur de 100 mm avec une épaisseur de 50 mm ou encore un réacteur de 150 mm avec une épaisseur de 75 mm, les constantes de temps de diffusion de la chaleur à travers ces parois d'épaisseurs différentes peuvent être estimées respectivement à 180 sec, 500 sec, et 1125 sec. Grâce à l'invention, ce temps peut être globalement divisé respectivement par 2,1, 6 et 13,4, avec une puissance micro-ondes de 5 kW par litre de produit à chauffer à l'intérieur du réacteur pour une élévation de température de 100° par exemple.

Concernant la fréquence de fonctionnement du réacteur, elle appartient à l'ensemble des fréquences microondes autorisées. Le choix d'une fréquence basse parmi ces fréquences autorisées permet d'atteindre des dimensions de réacteur plus élevées, et précisément des valeurs plus fortes du diamètre intérieur. L'épaisseur de la paroi métallique est proportionnelle à ce diamètre et la constante de temps de transfert thermique diffusif à travers cette paroi est une fonction du second degré de l'épaisseur. Le gain de temps réalisé au niveau de la transformation visée est donc d'autant plus élevé que les dimensions du réacteur sont importantes.

Le réacteur selon l'invention peut fonctionner en étant alimenté par un ou deux générateurs micro-ondes appliquant les micro-ondes par une ou les deux bases, en fonction de la transformation physico-chimique que l'on souhaite obtenir. La figure 1 montre l'alimentation aux deux extrémités tandis que la figure 2 illustre un réacteur alimenté à une seule extrémité, l'autre extrémité étant fermée par un bouchon 20. Le bouchon est démontable par exemple pour l'introduction de produits solides devant être traités. Le réacteur peut fonctionner en position horizontale ou verticale, la position verticale assurant une surchauffe centrale plus forte. L'introduction du produit à traiter dans le réacteur sera faite en haut ou en bas en fonction du profil de température axial et de la nature du produit que l'on souhaite traiter.

Il ressort de ce qui précède que l'invention permet d'atteindre au sein d'une phase sous-critique ou supercritique, une élévation rapide de la température en vue de la réalisation des conditions cinétiques optimales pour la transformation physique ou chimique de produits, c'est-à-dire grâce à des valeurs choisies d'incrément de température assurant la sélectivité des diverses transformations chimiques possibles et concurrentes. L'invention permet également le choix de la variation temporelle de la puissance micro-ondes appliquée au réacteur, la variation pouvant prendre toute allure temporelle continue ou pulsée. L'invention permet également la mesure instantanée des puissances électromagnétiques, d'une part, appliquée au réacteur, et, d'autre part, transmises ou réfléchies par celui-ci.

Les caractéristiques dimensionnelles et diélectriques du réacteur et des fenêtres sont telles que le mode de propagation TE11 peut être obtenu au sein du réacteur. Ce mode a été choisi pour augmenter l'intensité des sources de chaleur d'origine électromagnétique dans la partie axiale du réacteur. Le diamètre de ce dernier est de l'ordre du décimètre ou de plusieurs décimètres selon la fréquence de l'onde électromagnétique mise en oeuvre, sa forme n'est donc jamais tubulaire mais massive. La surface d'échange thermique entre le réacteur et le milieu extérieur est toujours plus faible que pour la forme tubulaire.

Il est encore à noter que l'application de l'invention n'est pas limitée à l'exemple de transformation donné. D'autres ensembles d'exemples de transformations chimiques peuvent être envisagés tels que des réactions de synthèse conduisant à des isomères ou à des produits secondaires nombreux et dépendant fortement de la vitesse d'échauffement des réactifs. La sulfonation du naphtalène, la synthèse des alcynols par dimérisation et trimérisation, font partie de cette classe de transformation. Le réacteur concerné par la présente invention est adapté à ces transformations car la réduction des échanges thermiques aux parois permet de réaliser au centre du réacteur des régimes thermiques transitoires à vitesse d'échauffement élevée.

## Revendications

1. Agencement de chauffage d'un produit diélectrique par micro-ondes, du type comprenant un réacteur à paroi latérale métallique de traitement dudit produit diélectrique, alimenté par au moins une de ses extrémités en micro-ondes par l'intermédiaire d'un guide d'ondes relié à un générateur micro-ondes, en vue de l'obtention d'une transformation physico-chimique, tel que le traitement hydrothermique de déchets, caractérisé en ce que le réacteur est formé par un cylindre (1) dont l'espace interne (2) délimité par la paroi métallique est rempli du produit à traiter et en ce qu'il comporte des moyens de réduction de la température de la paroi par rapport à la température dans la zone axiale du réacteur, ces moyens étant formés par une configuration monomodale du réacteur, selon laquelle l'intensité du champ électrique est réduite à la périphérie par rapport à la partie axiale de l'espace interne.

2. Agencement selon la revendication 1, caractérisé en ce que le guide d'ondes (6, 7) reliant la sortie du générateur micro-ondes au réacteur (1) est configuré sous forme d'un guide d'ondes d'adaptation des sections transversales de ladite sortie et du réacteur, par variation continue des surfaces métalliques conductrices.

3. Agencement selon l'une des revendications 1 ou 2, dans lequel le réacteur est fermé à au moins une de ses extrémités par un corps en un matériau diélectrique formant fenêtre permettant la pénétration des micro-ondes au sein du réacteur, caractérisé en ce que le corps (3), a une forme assurant une adaptation électromagnétique des deux interfaces au niveau du corps, respectivement à l'extérieur et à l'intérieur du réacteur.

4. Agencement selon la revendication 3, caractérisé en ce que le corps (3) en matériau diélectrique a la forme d'un rhomboèdre constitué de cônes ou de plusieurs troncs de cônes (8, 9) identiques ou différents entre lesquels est situé, le cas échéant, une partie intermédiaire cylindrique (10).

5. Agencement selon l'une des revendications précédentes, caractérisé en ce que le réacteur est alimenté en micro-ondes par ses deux extrémités par deux générateurs micro-ondes et en ce que le réacteur est fermé à chaque extrémité par un corps (3) en matière diélectrique à adaptation électromagnétique d'interface.

6. Agencement selon l'une des revendications précédentes, caractérisé en ce que le mode de fonctionnement monomodal constitue un moyen de réduction de l'inertie thermique du réacteur.

7. Agencement selon l'une des revendications précédentes, caractérisé en ce que le réacteur (1) est pourvu de sondes (15) de mesure de la température à l'intérieur du réacteur qui constituent des moyens de contrôle et de maîtrise des conditions de température du réacteur, notamment par rétroaction sur la valeur de la puissance électromagnétique mise en oeuvre.

8. Agencement selon l'une des revendications précédentes, caractérisé en ce que le réacteur comporte des raccords d'amenée et d'évacuation (12, 13) du produit respectivement à traiter et traité.

9. Agencement selon l'une des revendications 3 à 8, caractérisé en ce que le réacteur comporte une ouverture obturable d'accès à l'espace interne pour l'introduction d'un produit solide devant être traité.

10. Agencement selon la revendication 9 caractérisé en ce que l'ouverture d'accès est obtenue par démontage d'un corps diélectrique (3 ou 4).

11. Agencement selon l'une des revendications 9 ou 10, caractérisé en ce que l'ouverture d'accès est formé par une ouverture obturable (19) prévue dans la paroi latérale du réacteur.

12. Agencement selon l'une des revendications précédentes, caractérisé en ce que le réacteur (1) fonctionne en mode de propagation TE11.

13. Agencement selon l'une des revendications précédentes, caractérisé en ce qu'il est utilisé pour le traitement hydrothermique de déchets ou de produits.
